# EUROPÄISCHE PATENTSCHRIFT

(11) **EP 4 337 401 B1**
(45) Veröffentlichungstag und Bekanntmachung des Hinweises auf die Patenterteilung: **04.03.2026**
(21) Anmeldenummer: 22725510.6
(22) Anmeldetag: 28.04.2022
(51) Int. Cl.: B21K 1/70, F16B 39/34, F16B 39/38

(54) **SCHRAUBENMUTTERROHLING ZUR HERSTELLUNG EINER SICHERUNGSMUTTER**
SCREW-NUT BLANK FOR PRODUCING A SECURING NUT
ÉBAUCHE D'ÉCROU DE VIS POUR LA FABRICATION D'UN ÉCROU DE FIXATION

(30) Priorität: 11.05.2021 DE 102021112274
(43) Veröffentlichungstag der Anmeldung: 20.03.2024
(73) Patentinhaber: SF Handels- und Besitzgesellschaft mbH, 78554 Aldingen (DE)
(72) Erfinder: FLAIG, Hartmut, 78554 Aldingen (DE)
(74) Vertreter: Patent- und Rechtsanwälte Behrmann Wagner PartG mbB
(86) Internationale Anmeldenummer: PCT/EP2022/061412
(87) Internationale Veröffentlichungsnummer: WO 2022/238140

(56) Entgegenhaltungen:
- EP-A1- 2 271 449
- DE-B- 1 125 237
- JP-A- S60 132 116
- US-A- 2 289 828
- US-A- 3 289 724

## Beschreibung

### Schraubenmutterrohling zur Herstellung einer Sicherungsmutter

Die vorliegende Erfindung betrifft Schraubenmutterrohlinge zur Herstellung von Sicherungsmuttern.

Aus dem Stand der Technik sind bereits eine Vielzahl unterschiedlicher Sicherungsmuttern und deren Vorstufen in Form von Schraubenmutterrohlingen bekannt. Gleichermaßen sind bereits verschiedene Verfahren zur Herstellung der Schraubenmutterrohlinge sowie zu deren Weiterverarbeitung zu Sicherungsmutttern bekannt.

Dabei gibt es einerseits den Ansatz einer mehrteiligen Herstellung der Sicherungsmutter aus unterschiedlichen Komponenten oder Bauteilen. Diese Herangehensweise hat den Nachteil, dass ein aufwändiges und damit kostenintensives Herstellungsverfahren durchgeführt werden muss. Außerdem ist die Verbindung der entsprechenden Komponenten oder Bauteile eine potentielle Schwachstelle oder Ermüdungsstelle der Sicherungsmutter.

Außerdem gibt es im Stand der Technik bereits verschiedene Ansätze zur Herstellung einer einteiligen Sicherungsmutter, bevorzugt aus einem einteiligen Schraubenmutterrohling. Dabei kommen beispielsweise Verfahren der Kaltumformung wie das Kaltfließpressen zum Einsatz, um bevorzugt aus einem zylindrichen Metall-Ausgangsmaterial oder zylindrischen Ausgangskörpern in einem mehrstufigen Umformungsverfahren die Rohlinge oder die Sicherungsschrauben herzustellen.

Verschiedene dieser Lösungen aus dem Stand der Technik gehen auf die Anmelderin zurück. Die WO 2010/034324 A1 der Anmelderin bietet einen guten Überblick über den Stand der Technik und insbesondere auch über die verschiedenen bereits bekannten Verfahren und daraus resultierenden Sicherungsmuttern, die aus einem einteiligen Rohling hergestellt werden und eine einteilige oder einstückige Sicherungsmutter ausbilden.

Bei diesen gattungsgemäßen Lösungen wurde grundsätzlich der Ansatz verfolgt, dass in einem Stadium des Schraubenmutterrohlings an einer axialen Stirnfläche ein Ringkragen ausgebildet wurde, welcher in axialer Richtung verläuft oder in axialer Richtung von der Stirnfläche absteht, wobei in einem späteren Verfahrensstadium der besagte Ringkragen zur Ausbildung eines Formkragens umgeformt, insbesondere achswärtig umgeformt wurde, sodass zwischen einer Innengewindebohrung des Mutterkörpers und einer zu dieser Innengewindebohrung konzentrisch mit einem Abstand angeordneten Innenstirnfläche des Formkragens eine Verspannung oder Spannwirkung auf eine Schraube ausgeübt werden kann, die dann zur Sicherung der Schraube oder zur Selbstsicherung der Schraube oder eines Schraubbolzen führt.

Dazu wird in dem axial von der Innengewindebohrung durch einen Schlitz oder eine Ausnehmung beabstandeten Formkragen, insbesondere auf der Innenstirnfläche des Formkragens ein Gewinde eingeformt oder ausgebildet, welches einen gewissen Versatz zu dem Innengewinde der Innengewindebohrung des Mutterkörpers aufweist. Während des Einschraubens der Schraube in die Innengewindebohrung und das Innengewinde der Innenstirnfläche des Formkragens wird durch den Versatz der Gewinde und die axial federnde oder elastisch verformbare Eigenschaft des Formkragens eine Feder- oder Spannwirkung auf die Schraube erzeugt und damit eine Sicherung ermöglicht.

Folglich ist es einerseits notwendig, dass der Formkragen, insbesondere die Innenstirnfläche des Formkragens eine ausreichende axiale Breite oder Höhe aufweist, um ein ausreichend langes Innengewinde oder Sicherungsgewinde ausbilden zu können. Um jedoch die Umformung des Ringkragens zu dem Formkragen zu ermöglichen, ist es in gewisser Weise wünschenswert, wenn die Stärke des Ringkragens, die endseitig in einem unverformten oder axial ausgerichteten Zustand den Bereich aufweist, der nach der achswärtigen Umformung die Innenstirnfläche des Formkragens ausbildet, nicht zu groß gewählt wird, damit die Umformung erfolgen kann, ohne dass zu große Spannungen im Material entstehen, die nach dem Umformen gegebenenfalls zu einer Wellung des Materials führen können.

Um diesen Ansprüchen zu genügen, wurde in einer bereits bekannten Sicherungsmutter und einem dazugehörigen Verfahren zu deren Herstellung der Ringkragen axial umgeformt und gleichzeitig aufgestaucht, sodass der Ringkragen einerseits vor seiner Verformung eine verhältnismäßig geringe Wandstärke oder Stärke aufweisen kann, die die Verformung ermöglicht, andererseits aber die bei der Umformung und radialen Aufstauchung ausgebildete Innenstirnfläche des aus dem Ringkragen hergestellten Formkragens eine ausreichende axiale Höhe oder Breite aufweist, um das Sicherungsgewinde auszubilden oder einzuschneiden. Das radiale Aufstauchen des ausgebildeten Formkragens ist jedoch nachteilig, da das Aufstauchen zu wenig kontrolliert ausgeführt wird und damit zu einer verhältnismäßig ungenauen Innenoberfläche oder Innenstirnfläche des Formkragens führt.

In einer Weiterentwicklung des Stands der Technik wurden unterschiedliche Formen des Ringkragens etabliert, die eine achswärtige Umformung zu einem Formkragen erlauben, ohne dass dabei eine radiale Aufstauchung notwendig war. Ein wesentlicher Nachteil dieser Sicherungsmuttern bestand darin, dass der Formkragen auf einer axial äußeren und/oder axial inneren Außenoberfläche, also auf einer dem Mutterkörper abgewandten und/oder auf einer dem Mutterkörper zugewandten Außenoberfläche Vertiefungen vorsah. Diese Vertiefungen waren nötig, um bei der achswärtigen Umformung des Ringkragens die zumindest in den endseitigen Bereichen des Ringkragens zu einer Querschnitts- oder Durchmesserverringerung führt, das bestehende Material des Ringkragens umzuformen oder umzuverteilen.

Die besagten Vertiefungen oder versetzten Flächenabschnitte der Außen- und/oder Innenoberfläche des Formkragens sind jedoch nachteilig für die Sicherungswirkung des Formkragens, da das entsprechende Sicherungsgewinde auf der Innenstirnseite des Formkragens nur unvollständig, insbesondere abschnittsweise, ausgebildet werden kann und nur unter erhöhtem Aufwand ausgebildet werden kann. Außerdem sind die Vertiefungen nachteilig für die Federwirkung des Formkragens, die die Sicherungswirkung ermöglicht.

Weiterhin ist aus der US 2 289 828 A, welche die Basis für den Oberbegriff des Anspruchs 1 bildet, eine selbstsichernde Mutter und ein dementsprechender Mutterrohling mit einem axial abstehenden Ringkragen, der durch entsprechende Umformung zu einem Formkragen umgeformt wird und mit einem Sicherungsgewinde versehen wird, bekannt. Der Ringkragen ist mit einem sich aufweitenden Profil/Querschnitt vorgesehen.

Die US 3 289 724 A lehrt bereits eine selbstsichernde Mutter mit einem Formkragen, der aus einem Ringkragen hergestellt wird. Der Formkragen sieht kein eingeschnittenes Gewinde sondern lediglich eine Eingriffsoberfläche vor, die in ein entsprechendes Gewinde eingreift. Ausgehend von diesem Stand der Technik liegt die Aufgabe der vorliegenden Erfindung darin Schraubenmutterrohlinge und Sicherungsmuttern vorzuschlagen, die eine verbesserte Sicherungswirkung ermöglichen.

Hinsichtlich des Schraubenmutterrohlings zur Herstellung einer Sicherungsmutter wird diese Aufgabe mit den Merkmalen des Anspruchs 1 gelöst.

Vorteilhafte Ausführungsformen sind Gegenstände der Beschreibung und der Unteransprüche.

In erfindungsgemäßer Weise sieht der Schraubenmutterrohling zur Herstellung einer Sicherungsmutter, wobei die Sicherungsmutter einen an einer Stirnfläche des Schraubenkörpers einstückig mit dem Schraubenkörper ausgebildeten Formkragen mit einer konzentrisch zu einer Innengewindebohrung des Schraubkörpers verlaufenden Innenstirnfläche aufweist, der in axialer Richtung eine Beabstandung von der Innengewindebohrung aufweist und ein Sicherungs-Innengewinde aufweist, welches zu einem Innengewinde der Innengewindebohrung versetzt ist, vor ,dass der Schraubenmutterrohling einen axial verlaufenden Ringkragen aufweist, der zur Ausbildung des Formkragens durch Umformung dient, und wobei der Ringkragen eine in Umfangsrichtung gleichbleibende Kontur und in axialer Richtung eine sich mit zunehmendem Abstand von der Stirnfläche zunehmende Querschnittsform, insbesondere Konus-Querschnittsform, aufweist, wobei das Verhältnis einer Stärke des Ringkragens im Übergangsabschnitt zur Stirnfläche zu einer Stärke des Ringkragens an einem freien Ende, welches zur Ausbildung der Innenstirnfläche dient, zwischen 0,45 und 0,75, bevorzugt zwischen 0,5 und 0,7 liegt.

Ein Schraubenmutterrohling mit einem sich mit zunehmendem Abstand von der Stirnfläche des Mutterkörpers aufweitenden Konus-Querschnitt ist aus der oben genannten Druckschrift zum Stand der Technik bereits bekannt, wobei die dort, insbesondere in der Fig. 16b, gezeigte und im Dokument beschriebene Form des Ringkragens nicht in die Lage versetzte die Umformung zum Formkragen zu ermöglichen, ohne dass dabei die Außenoberfläche des gebildeten Formkragens Vertiefungen oder Versatzflächen aufweist, die wie oben beschrieben nachteilig für die Sicherungswirkung der Sicherungsmutter sind.

Es hat sich jedoch in überraschender Weise herausgestellt, dass bei dem erfindungsgemäßen Verlauf oder bei der erfindungsgemäßen Wahl des Verhältnisses der Stärke des ansonsten in Umfangsrichtung gleichbleibenden oder konstant ausgebildeten Ringkragens sowohl die radial aufstauchungsfreie Umformung, insbesondere achswärtige Umformung, zu einem Formkragen möglich ist und gleichzeitig eine Umformung zu einem Formkragen möglich ist, ohne dass die Außenoberfläche und/oder die Innenoberfläche des Formkragens Vertiefungen, Versatzflächen oder Ausnehmungen aufweisen muss. Vielmehr ermöglicht der erfindungsgemäße Querschnitt mit dem Verhältnis der Stärke des Ringkragens zwischen 0,45 und 0,75, bevorzugt zwischen 0,5 und 0,7 im Hinblick auf die Stärke des Ringkragens im Übergangsabschnitt zur Stirnfläche zur Stärke des Ringkragens an einem freien Ende, dass nach der Umformung des Ringkragens die gebildete Außenoberfläche und/oder Innenoberfläche über den gesamten Umfang eine ebene, insbesondere vertiefungsfreie oder versatzfreie Kontur oder Oberfläche ausbildet oder aufweist.

Bei der erfindungsgemäßen Sicherungsmutter sowie dem Schraubenmutterrohling handelt es sich bevorzugt um ein einteiligen Metallkörper, der besonders vorteilhaft mit Verfahren der Kaltumformung behandelt oder hergestellt wird.

Durch die Erfindung kann in einer nicht vorhersehbaren Weiterentwicklung des Stands der Technik erreicht werden, dass eine ausreichend breite oder hohe Innenstirnfläche des Formkragens ohne radiale Aufstauchung ausgebildet wird und gleichzeitig die Innenstirnfläche, durch die angrenzende oder angrenzenden ebenen, insbesondere vertiefungsfreien Außen- und/oder Innenoberflächen des Formkragens eine einfache Ausbildung oder Einbringung des Sicherungs-Innengewinde ermöglicht, sodass das Sicherungs-Innengewinde einfach ausgebildet werden kann und zudem der Formkragen eine vorteilhafte Verformungs- oder Federeigenschaft aufweist, die in Verbindung mit dem Versatz der Gewinde zwischen Innengewindebohrung und Innenstirnfläche die Sicherungswirkung der Sicherungsschraube bewirkt. Gleichermaßen ermöglicht die erfindungsgemäße Geometrie des Ringkragens eine Sicherungsmutter mit besonders guten Sicherungseigenschaften, da der aus dem Ringkragen gebildete Formkragen eben oder vertiefungsfrei bereitgestellt werden kann und somit ein optimiertes Feder- oder Spannverhalten aufweist.

Gemäß einer ersten vorteilhaften Ausführungsform des Schraubenmutterrohlings kann vorgesehen sein, dass das Verhältnis der Stärke des Ringkragens im Übergangsabschnitt zur Stirnfläche zu einer Stärke des Ringkragens an einem freien Ende, welches zur Ausbildung der Innenstirnfläche dient, bezogen auf die Länge des Ringkragens, zwischen dem Übergangsabschnitt und der Stirnfläche zwischen 0,1 pro Millimeter Länge bis 0,15 pro Millimeter Länge beträgt. Die Länge soll dabei durch das freie Ende des Ringkragens einerseits und durch den Bereich einer minimalen Stärke des Ringkragens andererseits definiert oder festgelegt werden. Dies bedeutet mit anderen Worten, dass in dem Übergangsabschnitt ein erster Bereich besteht, in dem in axialer Richtung, basierend auf der Querschnittform oder dem konusförmigen Querschnitt des Ringkragens eine Verringerung der Stärke des Ringkragens erfolgt. An diesen Abschnitt anschließend ist ein Abschnitt ausgebildet, in dem die Stärke des Schraubenmutterrohlings graduell oder sprunghaft ansteigt. Die axiale Position der geringsten Stärke des Ringkragens vor einem stetigen oder sprunghaften Anstieg der Stärke des Schraubenmutterrohlings soll zur Definition oder zur Bemessung der Länge des Ringkragens herangezogen werden.

Durch das Verhältnis zwischen Veränderung der Stärke des konusförmigen Querschnitts des Ringkragens zur Länge des Ringkragens, vor einer Verformung, insbesondere einer achswärtigen Umformung, wird in besonders vorteilhafter Weise unterstützt, dass die achswärtige Umformung des Ringkragens ermöglicht wird, bei gleichzeitiger Beibehaltung oder Ausbildung von über den gesamten Umfang ebenen, insbesondere vertiefungsfreien Außenoberflächen und/oder Innenoberflächen des ausgebildeten Formkragens.

Eine weitere besonders vorteilhafte Ausführungsform des Schraubenmutterrohlings sieht vor, dass die Stärke des Ringkragens am freien Ende das 0,8fache bis 1,5fache der Steigung eines auszubildenden Sicherungsgewindes am zum Formkragen umgeformten Ringkragen beträgt.

Damit wird in besonders vorteilhafter Weise nicht nur die Voraussetzung für eine vorteilhafte Ausbildung des Formkragens geschaffen, sondern darüber hinaus auch noch eine vorteilhafte Wirkung eines späteren Fomrkragens zur Sicherung oder zur Ausbildung eines Sicherungsgewindes gewährleistet. Denn nur wenn das Sicherungsgewinde einen ausreichenden Gewindeabschnitt ausbilden kann, kann die Sicherungswirkung des Sicherungsgewindes gewährleistet werden.

Eine weitere besonders bevorzugte Ausgestaltung des Schraubenmutterrohlings sieht vor, dass der Ringkragen in radialer Richtung zwischen zwei zu beiden Seiten abfallenden Schulterabschnitten der Stirnfläche des Mutterkörpers angeordnet ist. Dies bedeutet, dass der Ringkragen in radialer Richtung, insbesondere nach radial innen, nicht in eine ebene oder horizontale Fläche des Mutterkörpers übergeht oder mündet, sondern dass vielmehr auch der in Bezug auf den Ringkragen radial innen angeordnete Bereich der Stirnfläche des Mutterkörpers einen nach radial innen abfallenden Schulterabschnitt ausbildet.

Dabei kann selbstverständlich vorgesehen sein, dass ein radial außen ausgebildeter Schulterabschnitt sowie ein radial innen, in Bezug auf den Ringkragen ausgebildeter Schulterabschnitt der Stirnfläche des Mutterkörpers eine unterschiedliche Neigung oder Steigung aufweisen und/oder unterschiedliche Längen aufweisen. Besonders bevorzugt kann der radial innere Schulterabschnitt weniger steil ausgebildet sein aber dafür eine größere Länge aufweisen, als der radial äußere Schulterabschnitt.

Ebenfalls kann vorteilhaft vorgesehen sein, dass der Ringkragens ein hohlzylindrischer Endabschnitt angrenzend an und/oder ausgehend vom freie Ende aufweist, der bevorzugt eine axiale Erstreckung von bis zu einer Hälfte eines später auszubildenden Sicherungsgewindes am zum Formkragen umgeformten Ringkragens (2) umfasst.

Dadurch kann in vorteilhafter Weise eine verbesserte Stabilität des Ringkragens erreicht werden, die wiederum dafür sorgt, dass es beim Umformen des Ringkragens in den Formkragen der Sicherungsmutter nicht zum unerwünschten Ausknicken des Ringkragens/Formkragens kommt.

Hinsichtlich der nicht von der Erfindung umfassten Sicherungsmutter mit einem an einer Stirnfläche der Schraubenmutter angeordneten Formkragen mit einer konzentrisch zu einer Innengewindebohrung des Mutterkörpers verlaufenden Innenstirnfläche, welche in axialer Richtung eine Beabstandung von der Innengewindebohrung aufweist und ein Sicherungs-Innengewinde aufweist, welches zu einem Innengewinde der Innengewindebohrung versetzt ist, und welche bevorzugt hergestellt wird aus einem Schraubenmutterrohling gemäß der vorangehend beschriebenen Art, kann vorgesehen sein, dass der Formkragen zumindest angrenzend an die Innenstirnfläche eine über den gesamten Umfang ebene, insbesondere vertiefungsfreie, Außenoberfläche und/oder Innenoberfläche aufweist.

Wie oben bereits erläutert, ist die ebene Außenoberfläche und/oder Innenoberfläche über den gesamten Umfang des Formkragens eine wesentliche Voraussetzung für eine effektive Sicherungswirkung des Formkragens, beim Einschrauben einer Schraube oder eines Schraubbolzen.

Gemäß einer ersten vorteilhaften Ausführungsform der Sicherungsmutter kann vorgesehen sein, dass die Innenstirnfläche durch eine, insbesondere in der Endlage, radial stauchungsfreie Umorientierung des freien Endes des Ringkragens gebildet wird. Dadurch ist die erfindungsgemäße Sicherungsmutter mit einem Formkragen ausgestattet, der sowohl ebene Außen- und/oder Innenoberflächen über den gesamten Umfang des Formkragens aufweist und zudem im Bereich der Innenstirnfläche stauchungsfrei, also radial stauchungsfrei ausgebildet ist, sodass sich insgesamt der so ausgebildete Formkragen, besonders die Innenstirnfläche des Formkragens, zur Ausbildung des Sicherungs-Innengewindes eignet und der Formkragen darüber hinaus optimal Verformungseigenschaften oder Federeigenschaften aufweist, die die Sicherungswirkung der Sicherungsmutter bedingen oder zumindest beeinflussen.

Gemäß einer weiteren besonders bevorzugten Ausführungsform der Sicherungsmutter kann vorgesehen sein, dass die Beabstandung zwischen Formkragen und Stirnfläche durch eine Innennut gebildet ist, welche von einem inneren nach radial innen abfallenden Schulterabschnitt der Stirnfläche und einer, bevorzugt radial ebenen oder waagerechten, Unterkante des Formkragens begrenzt wird. Auch die Ausbildung der Innennut mit einer ebenen Oberseite, gebildet durch eine ebene Unterkante des Formkragens und eine nach radial innen abfallende Unterseite, gebildet durch die abfallende Schulter oder den abfallenden Schulterabschnitt der Stirnfläche hat in überraschender Weise vorteilhafte Auswirkungen auf die Sicherungsmutter.

Die vorliegende Erfindung sowie vorteilhafte Ausführungsvarianten werden anhand von stark schematisierten Zeichnungen nachfolgend erläutert. Darin zeigen:
- Fig. 1a, 1b:: einen erfindungsgemäßen Schraubenmutterrohling in einem dritten Verfahrensstadium zur Herstellung einer Sicherungsmutter,
- Fig. 2a, 2b:: eine nicht von der Erfindung umfasste Sicherungsmutter hergestellt aus dem Schraubenmutterrohling gemäß Fig. 1a, 1b.

Nachfolgend wird bezüglich der Begrifflichkeiten von einem Schraubenmutterrohling gesprochen, solange der zur Ausbildung des Formkragens vorgesehene Ringkragen noch in axialer Richtung ausgebildet ist oder im Wesentlichen in axialer Richtung verläuft. Von einer Sicherungsmutter wird dann gesprochen, wenn der Ringkragen entsprechend zum Formkragen umgeformt ist oder umgeformt wird. Diese Einteilung ist selbstredend nicht bindend. Denn einerseits kann für die tatsächliche Fertigstellung der Sicherungsmutter noch die Ausbildung von Innengewinden auch nach der Umformung des Ringkragens zum Formkragen vorgesehen sein, sodass die fertige Sicherungsmutter oder die vollständige Bearbeitung unter Herstellung einer Sicherungsmutter erst später vollendet oder abgeschlossen wird. Andererseits könnte grundsätzlich auch zu einem früheren Zeitpunkt schon ein Übergang vom Rohling zur Mutter definiert oder festgesetzt werden.

Soweit nicht anders beschrieben handelt es sich bei dem Schraubenmutterrohling und der Sicherungsmutter um einstückige metallische Körper und bei den dazugehörigen Verfahrensschritten bevorzugt um Kaltumformungs-Verfahren unter Einsatz entsprechender Werkzeuge und allgemein bekannter Fließumformungs- oder Kaltumformungsprozesse.

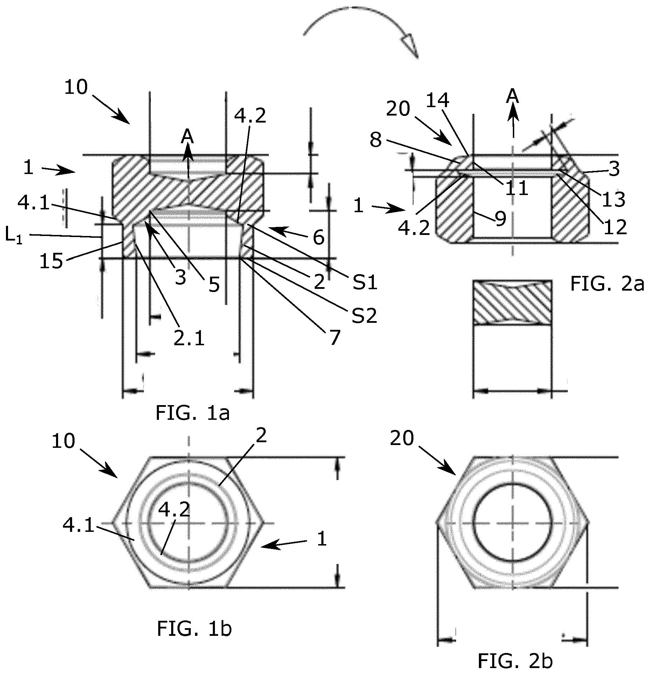

In Fig. 1a ist ein Schnitt durch einen Schraubenmutterrohling gezeigt. Die Fig. 1b zeigt dementsprechend eine Draufsicht auf den Schraubenmutterrohling. Zu erkennen ist bereits, dass an einer Stirnfläche 3 eines Mutterkörpers 1 ein axial verlaufender Ringkragen 2 einstückig ausgebildet ist, welcher in axialer Richtung A verläuft. Die Stirnfläche 3 des Mutterkörpers 1 weist bereits zwei an den Ringkragen 2 innen und außen, also radial innen und radial außen angrenzende Schulterabschnitte 4.1, 4.2 auf. Die radial innere Schulter oder der radial innere Schulterabschnitt 4.2 wird von einer Kante 5 begrenzt, die im Wesentlichen bereits den Durchmesser einer später im Mutterkörper 1 auszubildenden Innengewindebohrung definiert.

Nach ersten Bearbeitungsschritten und Umformungsschritten, die zum Stand der Technik gehören und dem Durchschnittsfachmann bekannt sind, wird in einem Umformungswerkzeug eine Kaltumverformung des Schraubenmutterrohlings durchgeführt, dessen Ergebnis in den Fig. 1a und 1b dargestellt ist. Dem Querschnitt der Fig. 1a ist dabei zu entnehmen, dass der Ringkragen 2 eine in Umfangsrichtung gleichbleibende Kontur aufweist, welche in axialer Richtung mit einem zunehmenden Abstand von der Stirnfläche 3 eine zunehmende oder sich aufweitende Querschnittsform, insbesondere Konus-Querschnittsform, aufweist. Die erfindungsgemäße Querschnittsform ist dabei so ausgestaltet, dass die Stärke S1 des Ringkragens 2 im Übergangsabschnitt 6 zur Stirnfläche 3 zu einer Stärke S2 des Ringkragens 2 an einem freien Ende 7 des Ringkragens 2, welches zur Ausbildung der Innenstirnfläche des Formkragens der Sicherungsmutter dient zwischen 0,45 und 0,75, bevorzugt zwischen 0,5 und 0,7 liegt.

Der äußere Rand oder die Außenoberfläche 15 des Ringkragens 2 verläuft in axialer Richtung und bildet eine zylindrische Kontur aus. Der Ringkragen 2 ist nach wie vor in radialer Richtung zwischen zwei nach außen sowie nach innen abfallenden Schulterabschnitten 4.1 und 4.2 der Stirnfläche 3 ausgebildet oder angeordnet.

In der Fig. 1a ist ebenfalls erkennbar, dass im Mutterkörper 1 des Schraubenmutterrohlings 10 nach wie vor ein massiver Abschnitt besteht, der u.a. auch die Stabilität des Schraubenmutterrohlings 10 gewährleistet, welcher zur Ausbildung der Innengewindebohrung in einem späteren Verfahrensschritt jedoch noch zu beseitigen oder zu entfernen ist.

In der Fig. 2a sowie der Fig. 2b ist eine Schnittdarstellung und eine Draufsicht auf eine erfindungsgemäße Sicherungsmutter 20 dargestellt. In dem auf das Stadium der Fig. 1a, 1b folgenden Bearbeitung oder dem entsprechenden Verfahrensschritt wurde der Ringkragen 2 zum Formkragen 8 umgeformt, wobei diese Umformung im Wesentlichen durch eine achswärtige Umformung des freien Endes 7 des Ringkragens 2 erfolgt ist oder durchgeführt wurde. Gleichzeitig wurde in einem gemeinsamen Verfahrensschritt, wenngleich nicht zu exakt identischen Zeiten, eine Auslochung oder Ausstanzung im Mutterkörper 1 unter Ausbildung einer Innengewindebohrung 9 bewerkstelligt. Die Sicherungsmutter 20 verfügt dementsprechend über einen an der Stirnfläche 3 der Schraubenmutter oder des Mutterkörpers 1 einstückig ausgebildeten Formkragen 8, mit einer konzentrisch zu der Innengewindebohrung 9 des Mutterkörpers 1 verlaufenden Innenstirnfläche 11. Die Innenstirnfläche 11 wurde dabei im Wesentlichen durch Umorientierung und ansonsten aufstauchungsfrei aus dem freien Ende 7 des Ringkragens 2 gebildet. Die Innenstirnfläche 11 des Formkragens 8 weist in axialer Richtung A eine Beabstandung von der Innengewindebohrung 9 auf. Zudem kann auf der Innenstirnfläche 11 ein noch nicht dargestelltes und ggf. noch nicht ausgebildetes Sicherungs-Innengewinde ausgebildet werden, welches mit einem Innengewinde, der Innengewindebohrung 9, welches in der Fig. 2a ebenfalls noch nicht dargestellt und ggf. noch nicht eingearbeitet ist, versetzt ausgebildet ist. Die Beabstandung der Innenstirnfläche 11 zur Oberkante oder einem oberen Ende der Innengewindebohrung 9 wird durch eine Innennut 12 bewerkstelligt oder ausgebildet, welche von einem inneren, nach radial innen abfallenden Schulterabschnitt 4.2 der Stirnfläche 3 und einer bevorzugt radial ebenen Unterkante oder Innenoberfläche 13 des Formkragens 8 begrenzt wird.

Wie der Sicherungsmutter 20 der Fig. 2a entnommen werden kann, ist die an die Innenstirnfläche 11 angrenzende Innenoberfläche 13 wie auch die an die Innenstirnfläche 11 angrenzende Außenoberfläche 14 über den gesamten Umfang eben ausgebildet, insbesondere vertiefungs- oder versatzfrei ausgebildet, was der Verformungs- oder Federwirkung des Formkragens 8 zugutekommt und damit die Sicherungswirkung der Sicherungsmutter verbessert.

Eine entsprechend ebene Innenoberfläche 13 und/oder Außenoberfläche 14 war bislang nur dann im Rahmen gattungsgemäßer Kaltverformungsverfahren von einstückigen Schraubenmutterrohlingen 10 oder Sicherungsmuttern realisierbar, wenn in dem Verfahrensschritt zusätzlich zu der achswärtigen Umformung des Formkragens 8 zum Ringkragen 2 auch eine radial wirkende Aufstauchung des freien Endes 7 oder der Innenstirnfläche bewirkt wurde.

### Bezugszeichenliste

- 1: Mutterkörper
- 2: Ringkragen
- 2.1: Innenoberfläche des Ringkragens
- 3: Stirnfläche
- 4.1: Schulterabschnitt
- 4.2: Schulterabschnitt
- 5: Kante
- 6: Übergangsabschnitt
- 7: freies Ende des Ringkragens
- 8: Formkragen
- 9: Innengewindebohrung
- 10: Schraubenmutterrohling
- 11: Innenstirnfläche
- 12: Innennut
- 13: Innenoberfläche
- 14: Außenoberfläche des Formkragens
- 15: Außenoberfläche des Ringkragens
- 20: Sicherungsmutter
- A: axiale Richtung
- L₁: Länge
- S1, S2: Stärke

## Patentansprüche

1. Schraubenmutterrohling zur Herstellung einer Sicherungsmutter (20) wobei die Sicherungsmutter (20) einen an einer Stirnfläche (3) der Schraubenmutter einstückig mit dem Mutterkörper (1) ausgebildeten Formkragen (8) mit einer konzentrisch zu einer Innengewindebohrung (9) des Mutterkörpers (1) verlaufenden Innenstirnfläche (11) aufweist, der in axialer Richtung (A) eine Beabstandung von der Innengewindebohrung (9) aufweist und ein Sicherungs-Innengewinde aufweist, welches zu einem Innengewinde der Innengewindebohrung (9) versetzt ist,
wobei der Schraubenmutterrohling (10) einen axial verlaufenden Ringkragen (2) aufweist, der zur Ausbildung des Formkragens (8) durch Umformung dient, und wobei der Ringkragen (2) eine in Umfangsrichtung gleichbleibende Kontur und in axialer Richtung (A) eine mit zunehmendem Abstand von der Stirnfläche (3) zunehmende Querschnittsform, insbesondere Konus-Querschnittsform, aufweist, **dadurch gekennzeichnet,**
**dass** das Verhältnis einer Stärke (S1) des Ringkragens (2) im Übergangsabschnitt (6) zur Stirnfläche (3) zu einer Stärke (S2) des Ringkragens (2) an einem freien Ende (7), welches zur Ausbildung der Innenstirnfläche (11) dient, zwischen 0,45 und 0,75, bevorzugt zwischen 0,5 und 0,7, liegt.

2. Schraubenmutterrohling nach Anspruch 1,
**dadurch gekennzeichnet,**
**dass** das Verhältnis der Stärke (S1, S2) des Ringkragens (2) im Übergangsabschnitt (6) zur Stirnfläche (3) zu einer Stärke (S1, S2) des Ringkragens (2) an einem freien Ende (7), welches zur Ausbildung der Innenstirnfläche (11) dient, bezogen auf die Länge (L₁) des Ringkragens (2) zwischen dem Übergangsabschnitt (6) und
der Stirnfläche (3) zwischen 0,1 pro Millimeter Länge bis 0,15 pro Millimeter Länge beträgt.

3. Schraubenmutterrohling nach Anspruch 1 oder 2,
**dadurch gekennzeichnet,**
**dass** die Stärke (S1, S2) des Ringkragens (2) am freien Ende (7) das 0,8fache bis 1,5fache der Steigung eines auszubildenden Sicherungs-Innengewindes am zum Formkragen (8) umgeformten Ringkragen (2) beträgt.

4. Schraubenmutterrohling nach einem der Ansprüche 1 bis 3,
**dadurch gekennzeichnet,**
**dass** der Ringkragen (2) in radialer Richtung zwischen zwei zu beiden Seiten abfallenden Schulterabschnitten (4.1, 4.2) der Stirnfläche (3) angeordnet ist.

## Claims

1. A screw-nut blank for producing a securing nut (20), the securing nut (20) having a shaped collar (8) formed in one piece with the nut body (1) on an end surface (3) of the screw nut, the shaped collar (8) having an inner end surface (11) concentric with an internally threaded hole (9) of the nut body (1), the shaped collar (8) having a distance from the internally threaded hole (9) in the axial direction (A) and having a securing female thread (22) offset from a female thread (23) of the internally threaded hole (9),
the screw-nut blank (10) having an axially extending ring collar (2) serving to form the shaped collar (8) by reshaping, and the ring collar (2) having a constant contour in the circumferential direction and a cross-sectional shape, in particular a conical cross-sectional shape, which increases in the axial direction (A) as the distance from the end surface (3) increases,
**characterized in that**
the ratio of a thickness (S1) of the ring collar (2) in the area of transition (6) toward the end surface (3) to a thickness (S2) of the ring collar (2) at a free end (7) serving to form the inner end surface (11) is between 0.45 and 0.75, preferably between 0.5 and 0.7.

2. The screw-nut blank according to claim 1,
**characterized in that**
the ratio of the thickness (S1, S2) of the ring collar (2) in the area of transition (6) toward the end surface (3) to a thickness (S1, S2) of the ring collar (2) at a free end (7) serving to form the inner end surface (11) is between 0.1 per millimeter in length to 0.15 per millimeter in length with respect to the length (L₁) of the ring collar (2) between the area of transition (6) and the end surface (3).

3. The screw-nut blank according to claim 1 or 2,
**characterized in that**
the thickness (S1, S2) of the ring collar (2) at the free end (7) is 0.8 to 1.5 times the pitch of a securing female thread (22) to be formed on the ring collar (2) reshaped into the shaped collar (8).

4. The screw-nut blank according to any one of claims 1 to 3,
**characterized in that**
in the radial direction, the ring collar (2) is disposed between two shoulder portions (4.1, 4.2) of the end surface (3) which slope to both sides.

## Revendications

1. Ébauche d'écrou de vis pour la fabrication d'un écrou de fixation (20), l'écrou de fixation (20) ayant un collier formé (8) formé d'un seul tenant avec le corps d'écrou (1) sur une surface d'extrémité (3) de l'écrou de vis, le collier formé (8) ayant une surface d'extrémité intérieure (11) concentrique avec un trou fileté intérieurement (9) du corps d'écrou (1), le collier formé (8) étant espacé du trou fileté intérieurement (9) dans la direction axiale (A) et ayant un filetage femelle de fixation (22) décalé d'un filetage femelle (23) du trou fileté intérieurement (9),
l'ébauche d'écrou de vis (10) ayant un collier annulaire (2) qui s'étend axialement et qui sert à former le collier formé (8) par formage et le collier annulaire (2) ayant un contour constant dans la direction circonférentielle et une forme en coupe transversale, notamment une forme en coupe transversale conique, qui augmente dans la direction axiale (A) à mesure que la distance par rapport à la surface d'extrémité (3) augmente,
**caractérisée en ce que**
le rapport d'une épaisseur (S1) du collier annulaire (2) dans une zone de transition (6) vers la surface d'extrémité (3) à une épaisseur (S2) du collier annulaire (2) à une extrémité libre (7) servant à former la surface d'extrémité intérieure (11) est compris entre 0,45 et 0,75, de préférence entre 0,5 et 0,7.

2. Ébauche d'écrou de vis selon la revendication 1,
**caractérisée en ce que**
le rapport de l'épaisseur (S1, S2) du collier annulaire (2) dans la zone de transition (6) vers la surface d'extrémité (3) à une épaisseur (S1, S2) du collier annulaire (2) à une extrémité libre (7) servant à former la surface d'extrémité intérieure (11) est compris entre 0,1 par millimètre de longueur et 0,15 par millimètre de longueur par rapport à la longueur (L₁) du collier annulaire (2) entre la zone de transition (6) et la surface d'extrémité (3).

3. Ébauche d'écrou de vis selon la revendication 1 ou 2,
**caractérisée en ce que**
l'épaisseur (S1, S2) du collier annulaire (2) à l'extrémité libre (7) est de 0,8 à 1,5 fois le pas d'un filetage femelle de fixation (22) à former sur le collier annulaire (2) transformé en collier formé (8).

4. Ébauche d'écrou de vis selon l'une quelconque des revendications 1 à 3,
**caractérisée en ce que**
dans la direction radiale, le collier annulaire (2) est disposé entre deux parties d'épaulement (4.1, 4.2) de la surface d'extrémité (3) qui descendent des deux côtés.
